# EUROPÄISCHE PATENTSCHRIFT

(11) **EP 3 034 954 B1**
(45) Veröffentlichungstag und Bekanntmachung des Hinweises auf die Patenterteilung: **18.04.2018**
(21) Anmeldenummer: 15191691.3
(22) Anmeldetag: 27.10.2015
(51) Int. Cl.: F24D 19/10, G05D 23/19

(54) **STEUERGERÄT FÜR EIN WARMWASSERSYSTEM UND VERFAHREN ZUM BETRIEB SOLCH EINES STEUERGERÄTS**
CONTROL DEVICE FOR A HOT WATER SYSTEM, AND METHOD FOR OPERATING SUCH A CONTROL DEVICE
APPAREIL DE COMMANDE POUR UN SYSTÈME D'EAU CHAUDE ET PROCÉDÉ DE FONCTIONNEMENT D'UN TEL APPAREIL DE COMMANDE

(30) Priorität: 16.12.2014 DE 102014226066
(43) Veröffentlichungstag der Anmeldung: 22.06.2016
(73) Patentinhaber: ROBERT BOSCH GMBH, 70442 Stuttgart (DE)
(72) Erfinder: Bartz-Beielstein, Thomas, 51643 Gummersbach (DE); Hoenig, Mark, 35435 Krofdorf-Gleiberg (DE); Scherer, Monika, 35396 Giessen (DE); Mersmann, Olaf, 65589 Oberzeuzheim (DE); Martin, Marko, 35457 Lollar (DE); Rebolledo, Margarita, 50937 Koeln (DE); Moritz, Steffen, 35510 Butzbach (DE)

(56) Entgegenhaltungen:
- EP-A1- 1 906 104
- EP-A2- 2 597 380
- DE-A1-102012 003 227

## Beschreibung

Die Erfindung betrifft ein Steuergerät gemäß Patentanspruch 1, ein Warmwassersystem gemäß Patentanspruch 5 und ein Verfahren gemäß Patentanspruch 9.

### Stand der Technik

Es sind Warmwassersysteme zur Bereitstellung von warmem Frischwasser bekannt. Dabei weist das Warmwassersystem eine Wärmequelle und einen Wärmespeicher auf, in dem das Frischwasser erwärmt gespeichert wird. Bei Bedarf wird über eine Warmwasserleitung das erwärmte Frischwasser von dem Wärmespeicher hin zu einer Entnahmestation gefördert. Die Wärmequelle wird üblicherweise mittels eines Zeitschaltplans gesteuert. Der Zeitschaltplan wird dabei durch den Nutzer manuell mittels einer Ein- und Ausgabeeinheit festgelegt.

Aus der EP 2 597 380 A2 ist eine Vorrichtung zur Regelung einer Bereitschaftstemperatur eines Warmwasserspeichers mit einer Einrichtung zur Einstellung einer Bereitschaftstemperatur des Warmwassers in den Warmwasserspeicher bekannt, wobei die Einrichtung zur Einstellung angepasst ist, um bei der Einstellung der Bereitschaftstemperatur eine Entnahmecharakteristik von Warmwasser aus dem Warmwasserspeicher zu berücksichtigen, wobei die Bereitschaftstemperatur des Warmwassers in einem Zeitintervall, in dem keine Entnahme detektiert wurde, abgesenkt wird und nach einer darauffolgenden Entnahme wieder angehoben wird.

### Offenbarung der Erfindung

Es ist Aufgabe der Erfindung, ein verbessertes Steuergerät, ein verbessertes Warmwassersystem und ein verbessertes Verfahren bereitzustellen.
Diese Aufgabe wird mittels eines Steuergeräts gemäß Patentanspruch 1 gelöst. Vorteilhafte Ausführungsformen sind in den abhängigen Ansprüchen angegeben.

Erfindungsgemäß wurde erkannt, dass ein verbessertes Steuergerät für ein Warmwassersystem mit einem Wärmespeicher dadurch bereitgestellt werden kann, dass das Steuergerät eine Schnittstelle, eine Steuerungseinrichtung und einen Datenspeicher aufweist. Die Steuerungseinrichtung ist mit der Schnittstelle und dem Datenspeicher verbunden. Die Schnittstelle ist mit einem Temperatursensor des Wärmespeichers verbindbar und ist ausgebildet, ein mit einer Temperatur eines in dem Wärmespeicher anordenbares Wärmespeichermediums korrelierendes Temperatursignal des Temperatursensors zu erfassen und der Steuereinrichtung zur Verfügung zu stellen. Die Steuereinrichtung ist ausgebildet, der erfassten Temperatur eine Erfassungszeit zuzuordnen. Die Steuereinrichtung ist ferner ausgebildet, eine Änderung der Temperatur über die Erfassungszeit zu ermitteln. In dem Datenspeicher ist ein vordefinierter Schwellenwert abgelegt. Die Steuerungseinrichtung ist ausgebildet, die ermittelte Änderung mit dem vordefinierten Schwellenwert in einem Vergleich zu vergleichen. Ferner ist die Steuereinrichtung ausgebildet, in Abhängigkeit eines Ergebnisses des Vergleichs einen Steuerparameter in dem Datenspeicher zur Steuerung einer Wärmequelle des Warmwasserssystems festzulegen. Die Schnittstelle ist mit einer Zirkulationspumpe verbindbar. Die Steuereinrichtung ist ausgebildet, einen Betrieb der Zirkulationspumpe zu erfassen. Die Steuereinrichtung ist ausgebildet, einen Betriebszustand der Zirkulationspumpe zur jeweils zugeordneten Erfassungszeit zu überprüfen. Die Steuereinheit ist ausgebildet, das Ergebnis des Vergleichs zu ignorieren, wenn zu der Erfassungszeit um dem Unterschreiten des vordefinierten Schwellenwerts durch die Änderung der Temperatur ein aktiver Betriebszustand der Zirkulationspumpe vorliegt.

Diese Ausgestaltung hat den Vorteil, dass eine Festlegung durch den Nutzer mittels einer Ein- und Ausgabeeinrichtung, die mit dem Steuergerät verbindbar ist, unnötig ist, und ein Nutzerkomfort des Steuergeräts verbessert wird.

In einer weiteren Ausführungsform weist der Schwellenwert einen Wert auf, der kleiner oder gleich einer auskühlungsbedingten Änderung der Temperatur des Wärmespeichermediums über die Erfassungszeit ist. Auf diese Weise kann das Wärmespeichersystem mit einer niedrigen Anzahl von Sensoren betrieben werden. Insbesondere kann auf einen Durchflusssensor zur Erfassung einer Entnahme von Wärmespeichermedium aus dem Wärmespeicher verzichtet werden.

In einer weiteren Ausführungsform ist der Steuerparameter als Zeitschaltplan ausgebildet.

In einer weiteren Ausführungsform ist in dem Datenspeicher ein Auswerteparameter abgelegt. Das Steuergerät ist ausgebildet, den Steuerparameter in Abhängigkeit des Ergebnisses des Vergleichs und des Auswerteparameters zu ermitteln. Dadurch kann eine auch Zukunftsvorhersage für den Steuerparameter erfolgen.

Die Aufgabe wird auch durch ein Warmwassersystem gemäß Patentanspruch 5 gelöst. Vorteilhafte Ausführungsformen sind in den abhängigen Ansprüchen angegeben.

Erfindungsgemäß wurde erkannt, dass ein verbessertes Warmwassersystem dadurch bereitgestellt werden kann, dass das Warmwassersystem einen Wärmespeicher und ein Steuergerät, das wie oben beschrieben ausgebildet ist, aufweist. Der Wärmespeicher ist mit einem Wärmespeichermedium befüllbar. Der Wärmespeicher weist einen Temperatursensor auf. Der Temperatursensor ist mit der Schnittstelle des Steuergeräts verbunden. Der Temperatursensor ist ausgebildet, eine Temperatur des Wärmespeichermediums zu erfassen und ein zur erfassten Temperatur korrespondierendes Temperatursignal bereitzustellen.

Diese Ausgestaltung hat den Vorteil, dass auf einen Durchflusssensor zur Erfassung einer Entnahme des Wärmespeichermediums aus dem Wärmespeicher verzichtet werden kann. Dadurch kann das Warmwassersystem besonders kostengünstig ausgebildet werden und somit die Investitionskosten für den Nutzer des Warmwassersystems gering gehalten werden.

In einer weiteren Ausführungsform weist das Warmwassersystem eine Wärmequelle auf. Die Wärmequelle ist mit dem Wärmespeicher gekoppelt und mit der Schnittstelle des Steuergeräts verbunden. Das Steuergerät ist ausgebildet, auf Grundlage des Steuerparameters die Wärmequelle zur Erwärmung des Wärmespeichermediums zu steuern.

In einer weiteren Ausführungsform ist eine Erfassungseinrichtung vorgesehen. Die Erfassungseinrichtung ist mit der Schnittstelle des Steuergeräts verbunden. Die Erfassungseinrichtung ist ausgebildet, eine Anwesenheit eines Nutzers in einem Gebäude zu erfassen und ein zur Anwesenheit des Nutzers korrelierendes Nutzersignal der Steuereinrichtung bereitzustellen. Die Steuereinrichtung ist ausgebildet, das Nutzersignal bei der Ermittlung des Steuerparameters zu berücksichtigen.
In einer weiteren Ausführungsform umfasst die
Erfassungseinrichtung wenigstens einen Bewegungssensor und/oder einen Nahfeldempfänger.

Die Aufgabe wird aber auch durch ein Verfahren gemäß Patentanspruch 9 gelöst.
Erfindungsgemäß wurde erkannt, dass ein verbessertes Verfahren zum Betrieb eines Steuergeräts, das wie oben beschrieben ausgebildet ist, und zum Betrieb eines Warmwasserssystems, das ebenso wie oben beschrieben ausgebildet ist, dadurch bereitgestellt werden kann, dass eine Temperatur eines Wärmespeichermediums in einem Wärmespeicher erfasst wird, wobei der erfassten Temperatur eine Erfassungszeit zugeordnet wird, wobei eine Änderung der Temperatur über die Erfassungszeit ermittelt wird, wobei die Änderung mit einem vordefinierten Schwellenwert in einem Vergleich verglichen wird, wobei ein Betriebszustand der Zirkulationspumpe zur jeweils zugeordneten Erfassungszeit überprüft wird, wobei das Ergebnis des Vergleichs ignoriert wird, wenn zu der Erfassungszeit und dem Unterschreiten des vordefinierten Schwellenwerts durch die Änderung der Temperatur ein aktiver Betriebszustand der Zirkulationspumpe vorliegt, wobei in Abhängigkeit eines Ergebnisses des Vergleichs ein Steuerparameter festgelegt wird.

Nachfolgend wird die Erfindung anhand von Figuren näher erläutert. Dabei zeigen:
- Figur 1: eine schematische Darstellung eines Warmwassersystems;
- Figur 2: ein Diagramm eines Temperaturverlaufs und eines Verlaufs einer Änderung der Temperatur aufgetragen über einer Erfassungszeit;
- Figur 3: ein Diagramm eines Temperaturverlaufs aufgetragen über einer Erfassungszeit;
- Figur 4: ein Diagramm eines Verlaufs einer Temperaturänderung aufgetragen über einer Erfassungszeit;
- Figur 5: eine schematische Darstellung eines Steuerparameters;
- Figur 6: ein Ablaufdiagram eines Verfahrens zum Betrieb des in Figur 1 gezeigten Warmwassersystems;
- Figur 7: eine schematische Darstellung eines Warmwassersystems gemäß einer zweiten Ausführungsform;
- Figur 8: ein Ablaufdiagram eines Verfahrens zum Betrieb des in Figur 7 gezeigten Warmwassersystems;
- Figur 9: eine schematische Darstellung eines Warmwassersystems gemäß einer dritten Ausführungsform;
- Figur 10: ein Ablaufdiagramm eines Verfahrens zum Betrieb des in Figur 9 gezeigten Warmwassersystems;
- Figur 11: eine schematische Darstellung eines Warmwassersystems gemäß einer vierten Ausführungsform; und
- Figur 12: ein Ablaufdiagram eines Verfahrens zum Betrieb des in Figur 11 gezeigten Warmwassersystems;

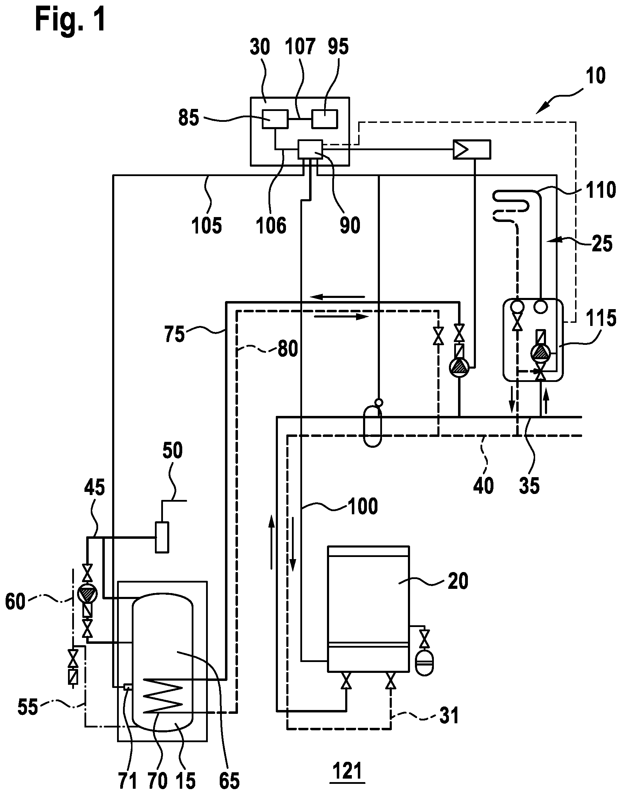

Figur 1 zeigt eine schematische Darstellung eines Warmwassersystems 10. Das Warmwassersystem 10 weist einen Wärmespeicher 15, eine Wärmequelle 20, eine Heizkreislauf 25 und ein Steuergerät 30 auf.

Der Heizkreislauf 25 ist mittels einer ersten Leitung 35 und mittels einer zweiten Leitung 40 fluidisch mit der Wärmequelle 20 verbunden. Der Wärmespeicher 15 ist mittels einer dritten Leitung 45 mit wenigstens einer Entnahmestation 50 fluidisch verbunden. Ferner ist der Wärmespeicher 15 über eine vierte Leitung 55 mit einem Frischwassernetz 60 fluidisch verbunden. Über die vierte Leitung 55 ist der Wärmespeicher 15 mit einem als Wärmespeichermedium verwendbaren Frischwasser 65 füllbar. Ferner weist der Wärmespeicher 15 einen ersten Wärmetauscher 70 auf. Der erste Wärmetauscher 70 ist über eine fünfte Leitung 75 mit der ersten Leitung 35 und über eine sechste Leitung 80 mit der zweiten Leitung 40 verbunden. Der Wärmespeicher 15 umfasst einen Temperatursensor 71. Der Temperatursensor 71 ist ausgebildet, eine Temperatur des im Wärmespeicher 15 angeordneten Frischwassers 65 zu erfassen. Der Temperatursensor 71 stellt ein zur Temperatur des Frischwassers 65 korrelierendes Temperatursignal zur Verfügung.

Das Steuergerät 30 weist eine Steuereinrichtung 85, eine Schnittstelle 90 und einen Datenspeicher 95 auf. Die Schnittstelle 90 ist mittels einer ersten Verbindung 100 mit der Wärmequelle 20 verbunden. Ferner ist die Schnittstelle 90 mittels einer zweiten Verbindung 105 mit dem Temperatursensor 71 verbunden. Die Schnittstelle 90 ist über eine dritte Verbindung 106 mit der Steuereinrichtung 85 verbunden. Die Schnittstelle 90 kann ferner mit weiteren Komponenten des Warmwassersystems 10 verbunden sein. Ferner ist denkbar, dass die Schnittstelle 90 mit einer oder mehreren Ein- und Ausgabeeinrichtungen (nicht dargestellt) verbunden ist. Der Datenspeicher 95 ist über eine vierte Verbindung 107 mit der Steuereinrichtung verbunden. In dem Datenspeicher 95 sind wenigstens ein Steuerparameter 91 und ein vordefinierter Schwellenwert abgelegt.

Der Heizkreislauf 25 umfasst wenigstens einen zweiten Wärmetauscher 110. Der zweite Wärmetauscher 110 ist beispielsweise in einem Raum eines Gebäudes angeordnet. Ferner umfasst der Heizkreislauf 25 eine Heizsteuereinrichtung 115, die mit der ersten und zweiten Leitung 35, 40 und mit dem zweiten Wärmetauscher 110 fluidisch verbunden ist. Die Heizsteuereinrichtung 115 steuert eine Wärmeabgabe des zweiten Wärmetauschers 110 zur Erwärmung des Gebäudes.

In der ersten und zweiten Leitung 35, 40 sowie in der fünften und sechsten Leitung 75, 80 sowie dem Heizkreislauf 25 und dem ersten Wärmetauscher 70 ist das Wärmeträgermedium 31 vorgesehen. Das Wärmeträgermedium 31 kann beispielsweise Wasser aufweisen.

Es wird darauf hingewiesen, dass selbstverständlich das Warmwassersystem 10 weitere Wärmequellen aufweisen kann. Auch ist es denkbar, dass auf den Heizkreislauf 25 verzichtet wird. Die Wärmequelle 20 ist in der Ausführungsform als Gasbrenner ausgebildet. Selbstverständlich ist auch denkbar, dass die Wärmequelle 20 ein Ölbrenner, ein thermisches Solarmodul und/oder eine Wärmepumpe ist. Selbstverständlich sind auch andere Ausgestaltungen der Wärmequelle 20 denkbar. Die Wärmequelle 20 stellt im Betrieb eine Wärmeenergie zur Erwärmung eines Wärmeträgermediums 31 bereit.

Im Betrieb des Warmwassersystems 10 erwärmt die Wärmequelle 20 das Wärmeträgermedium 31. Das erwärmte Wärmeträgermedium 31 wird beispielsweise mittels einer nicht dargestellten Förderpumpe über die erste Leitung 35 hin zum Heizkreislauf 25 und zu der fünften Leitung 75 gefördert. Von der fünften Leitung 75 wird das Wärmeträgermedium 31 in den ersten Wärmetauscher 70 gefördert. Das Wärmeträgermedium 31 gibt dabei Wärmeenergie über den ersten Wärmetauscher 70 an das Frischwasser 65 ab und erwärmt dieses. Das erwärmte Frischwasser 65 wird dabei in dem Wärmespeicher 15 gespeichert. Das abgekühlte Wärmeträgermedium 31 wird über die sechste Leitung 80 von dem ersten Wärmetauscher 70 hin zu der zweiten Leitung 40 gefördert. Über die zweite Leitung 40 wird das abgekühlte Wärmeträgermedium 31 wieder zurück zur Wärmequelle 20 gefördert, welche dieses wieder erwärmt. Ist der Heizkreislauf 25 aktiviert, so entnimmt der zweite Wärmetauscher 110 dem Wärmeträgermedium 31 ebenso Wärme und gibt diese zur Beheizung des Raums des Gebäudes an diesen ab.

Bei Deaktivierung des Heizkreislaufs 25 dient die Wärmequelle 20 ausschließlich zur Erwärmung des Frischwassers 65. Das Frischwasser 65 kühlt dabei, wenn die Wärmequelle 20 deaktiviert ist und wenn über die dritte Leitung 45 kein erwärmtes Frischwasser 65 aus dem Wärmespeicher 15 entnommen wird, im Laufe der Zeit ab. Dabei liegt der Auskühlung ein Wärmetransport von dem erwärmten Frischwasser 65 zu eine Umgebung 121 des Wärmespeichers 15, die üblicherweise kühler als das in dem Wärmespeicher 15 gespeicherte Frischwasser 65 ist, zugrunde. Die Auskühlung des Frischwassers 65 ist hierbei über die Zeit im Wesentlichen konstant. Die Auskühlung des Frischwassers 65 ist konstruktiv im Wesentlichen von einer Isolierung des Wärmespeichers 15 und einem Speichervolumen des Wärmespeichers 15 abhängig.

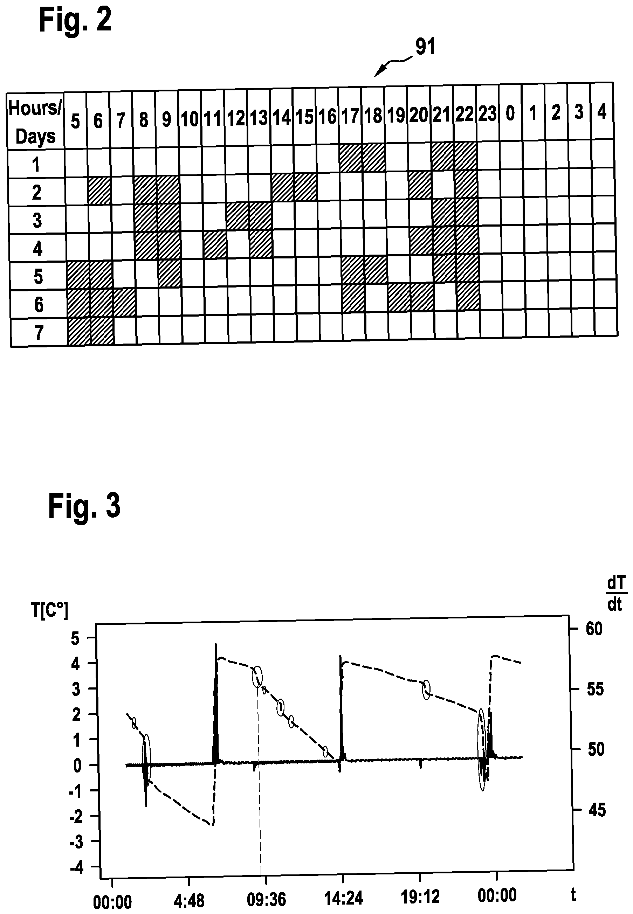

Figur 2 zeigt eine schematische Darstellung des Steuerparameters 91. Der Steuerparameter 91 ist beispielhaft als Zeitschaltplan ausgebildet und weist einen tabellarischen Aufbau auf. Dabei ist beispielhaft auf der Ordinate in Figur 2 eine Woche in nummerierte Tage (von 1 bis 7 aufgeteilt) aufgetragen. Auf der Abszisse ist eine Stundeneinteilung aufgetragen, die jeweils einem Tag der Woche zugeordnet ist. Die Stundeneinteilung ist dabei so gewählt, dass sie sich auf die jeweilige Stunde eines Tages bezieht (z.B. 0:00 bis 0:59). Die Stundeneinteilung ist somit 60 Minuten. Selbstverständlich ist auch denkbar, dass der Zeitschaltplan anders ausgebildet ist. Zu jeder Stunde eines Tages ist ein Steuerzustand der Wärmequelle 20 zugeordnet abgelegt. Der Steuerzustand ist in Figur 2 mittels einer Füllung des jeweils zum zugeordneten Tag und Stunde dargestellten Kastens zugeordnet. In Figur 2 ist beispielhaft mit einem schraffiert gefüllten Kasten ein Steuerzustand zur Aktivierung der Wärmequelle 20 symbolisch dargestellt. Ist der Kasten leer dargestellt, entspricht dies einer deaktivierten Wärmequelle. Sind zwei nebeneinander gefüllte Kasten in dem Schaltplan, wie beispielsweise bei Tag 1 zwischen 17 und 18 Uhr, dargestellt, so soll dies einen durchgehenden Betrieb von 17 Uhr bis 18:59 Uhr symbolisieren. Selbstverständlich ist auch denkbar, dass in dem Zeitschaltplan weitere zeitlich beschränkte Ereignisse abgelegt sind.

Von der Schnittstelle 90 wird das Steuersignal über die erste Verbindung 100 an die Wärmequelle 20 übertragen. In Abhängigkeit des Steuersignals wird die Wärmequelle 20 aktiviert oder deaktiviert.

Figur 3 zeigt einen Verlauf einer Temperatur T und eine Änderung dT/dt der Temperatur T aufgetragen über einer Erfassungszeit t. Dabei ist in Figur 3 die Temperatur T mit strichlierter Linie gezeigt, während hingegen die Änderung dT/dt der Temperatur T mit durchgezogener Linie gezeigt ist.

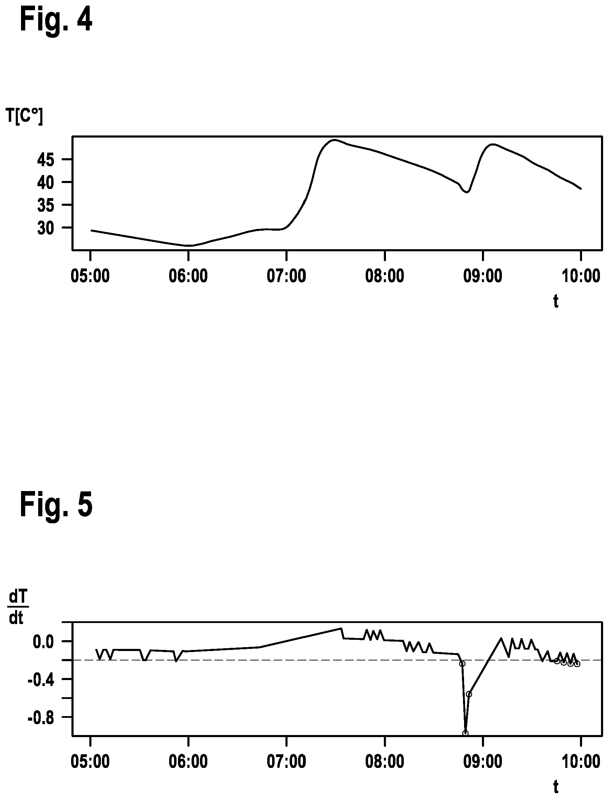

Figur 4 zeigt einen weiteren Verlauf der Temperatur T aufgetragen über der Erfassungszeit t. Figur 5 zeigt eine Änderung dT/dt der Temperatur T des in Figur 4 gezeigten Temperaturverlaufs. Dabei sind der Temperaturverlauf, gezeigt in Figur 3 und die Änderung dT/dt des Temperaturverlaufs unterschiedlich zu dem in den Figuren 4 und 5 gezeigten Verlauf der Temperatur T und dem Verlauf der Änderung der Temperatur dT/dt.

Dabei zeigen die Temperaturverläufe T ein unterschiedliches beispielhaftes Nutzerverhalten. Die gezeigten Temperaturverläufe können selbstverständlich in Abhängigkeit des Nutzerverhaltens auch anders ausgebildet sein.

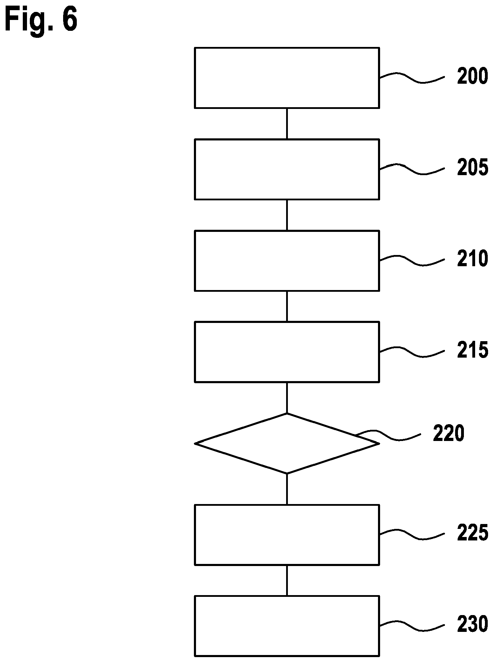

Figur 6 zeigt ein Ablaufdiagramm eines Verfahrens zur Steuerung des in Figur 1 gezeigten Warmwassersystems 10 zur Festlegung des in Figur 2 gezeigten Steuerparameters 91.

In einem ersten Verfahrensschritt 200 erfasst die Steuereinrichtung 85 das durch den Temperatursensor 71 über die zweite Verbindung 105 an die Schnittstelle 90 und von der Schnittstelle 90 über die dritte Verbindung 106 bereitgestellte Temperatursignal. Die Erfassung der Temperatur T durch den Temperatursensor 71 erfolgt in der Ausführungsform in einem vordefinierten zeitlichen Abstand. So ist beispielsweise der zeitliche Abstand zwischen zwei erfassten Temperaturen T des in Figur 3 und in den Figuren 4 und 5 gezeigten Temperaturverlaufs T eine Minute. Selbstverständlich ist auch denkbar, dass der Abstand zwischen erfassten Temperaturen T anders ist.

Ferner ist auch denkbar, dass die Erfassung der Temperatur T durch den Temperatursensor 71 kontinuierlich erfolgt, während hingegen die Steuereinrichtung 85 nur in einem vordefinierten zeitlichen Abstand das Temperatursignal des Temperatursensors 71 erfasst.

Des Weiteren ist denkbar, dass die Steuereinrichtung 85 eine Information erfasst, ob die Wärmequelle 20 den Heizkreislauf 25 mit Wärme versorgt oder nicht. Dazu kann das Steuergerät 35 mit der Heizsteuereinrichtung 115 des Heizkreislaufs 25 verbunden sein.

In einem zweiten Verfahrensschritt 205 ordnet die Steuereinrichtung 85 der erfassten Temperatur eine Erfassungszeit t zu. Die Erfassungszeit t kann beispielsweise durch eine Uhr der Steuereinrichtung 85 ermittelt werden. Die Erfassungszeit t kann dabei beispielsweise eine Ortszeit eines Aufstellungsorts der Steuereinrichtung 85 entsprechen. Die Erfassungszeit t beinhaltet in der Ausführungsform auch eine Angabe über den Tag der Woche, korrespondierend zu dem in Figur 2 erläuterten Steuerparameter 91.

In einem dritten Verfahrensschritt 210 legt die Steuereinrichtung 85 die erfasste Temperatur mit der zugeordneten Erfassungszeit t im Datenspeicher 95 ab.

In einem vierten Verfahrensschritt 215 ermittelt die Steuereinrichtung 85 auf Grundlage der erfassten Temperatur T jeweils die Änderung dT/dt der Temperatur über der Erfassungszeit t.

Im Datenspeicher 95 ist der vordefinierte Schwellenwert abgelegt. Der vordefinierte Schwellenwert korreliert dabei mit der auskühlungsbedingten Änderung dT/dt der Temperatur T des Frischwassers 65 über der Erfassungszeit t. Der vordefinierte Schwellenwert ist dabei vorteilhafterweise kleiner oder gleich der auskühlungsbedingten Änderung dT/dt der Temperatur des Frischwassers 65. Der vordefinierte Schwellenwert kann beispielsweise, wie in Figur 5 gezeigt, einen Wert von -0,2 aufweisen. Selbstverständlich sind auch andere Werte für den vordefinierten Schwellenwert denkbar.

In einem fünften Verfahrensschritt 220 vergleicht die Steuereinrichtung 85 die ermittelte Änderung dT/dt der Temperatur in einem Vergleich mit dem vordefinierten Schwellenwert.

Dabei korreliert ein Unterschreiten des vordefinierten Schwellenwerts durch die Änderung dT/dt der Temperatur T über die Erfassungszeit t mit einer Entnahme von Frischwasser 65 aus dem Wärmespeicher 15 über die dritte Leitung 45 mittels der Entnahmestation 50. Bei der Entnahme von Frischwasser 65 fließt automatisch über die vierte Leitung 55 kühles Frischwasser 65 aus dem Frischwassernetz 60 in den Wärmespeicher 15 ein und kühlt die Temperatur T des im Wärmespeicher 15 vorhandenen erwärmten Frischwassers 65 ab. Die Abkühlung kann insbesondere dann erfasst werden, wenn der Temperatursensor 71 etwa in einer unteren Hälfte des Wärmespeichers 15 angeordnet ist. Selbstverständlich ist eine andere Anordnung des Temperatursensors 71 denkbar. Das Unterschreiten des Schwellenwerts ist in den Figuren 3 bis 5 mit jeweils einem Kringel markiert.

Überschreitet oder ist die Änderung dT/dt der Temperatur gleich dem vordefinierten Schwellenwert wird kein Frischwasser 65 aus dem Wärmespeicher 15 entnommen.

Dadurch kann ohne das Vorhandensein eines Durchflusssensors beispielsweise an der Entnahmestation 75 oder in der dritten Leitung 45 die Entnahme von Frischwasser 65 aus dem Wärmespeicher 15 erfasst werden.

In einem sechsten Verfahrensschritt 225 legt die Steuereinrichtung 85 den Steuerparameter 91 in dem Datenspeicher 95 in Abhängigkeit des Ergebnisses des Vergleichs (vgl. fünften Verfahrensschritt 220) ab.

In dem Fall, dass das Ergebnis des Vergleichs vom fünften Verfahrensschritt 220 das Unterschreiten des vordefinierten Schwellenwerts durch die Temperaturänderung dT/dt zur Erfassungszeit t zeigt, so legt die Steuereinrichtung 85 in dem sechsten Verfahrensschritt 225 den Steuerzustand für die Wärmequelle 20 als aktiviert fest.

In dem Fall, dass das Ergebnis des Vergleichs vom fünften Verfahrensschritt 220 das Überschreiten des vordefinierten Schwellenwerts durch die Temperaturänderung dT/dt zur Erfassungszeit t zeigt, so legt die Steuereinrichtung 85 in dem sechsten Verfahrensschritt 225 den Steuerzustand für die Wärmequelle als deaktiviert fest.

Ferner ist auch denkbar, dass die Steuereinrichtung 85 die Information über die erfasste Entnahme der Heizsteuereinrichtung 115 bereitstellt, so dass die Heizsteuereinrichtung 115 eine zusätzliche Information über eine Anwesenheit des Nutzers erhält und diese bei der Steuerung des zweiten Wärmetauschers 110 berücksichtigen kann.

In der Ausführungsform erfasst die Steuereinrichtung, wie oben beschrieben, minütlich die Temperatur T des Temperatursensors 71. Die Änderung dT/dt der Temperatur T wird ebenso somit minütlich genau ermittelt. Auf Grundlage, dass der Zeitschaltplan, wie in Figur 5 gezeigt, nur einen stündlich zugeordneten Schaltzustand der Wärmequelle 20 aufweist, wird in dem Zeitschaltplan für die zu der Änderung dT/dt der Temperatur T zugeordnete Erfassungszeit t und die zu der Erfassungszeit entsprechende Stunde der Steuerzustand als aktiv gesetzt, wenn innerhalb der Stunde ein einmaliges und kurzes Unterschreiten des Schwellenwerts durch die Änderung dT/dt der Temperatur T vorliegt. Selbstverständlich ist anstatt der eben beschriebenen Festlegung des Steuerzustands auch denkbar, dass die Steuereinrichtung 85 eine zeitliche Unterschreitungsdauer der Unterschreitung des Schwellenwerts durch die Änderung dT/dt der Temperatur T über die Erfassungszeit t erfasst und in einem weiteren Vergleich mit einem im Datenspeicher 95 abgelegten vordefinierten weiteren Schwellenwert, der mit einem vordefinierten Wert für die Unterschreitungsdauer korreliert, vergleicht. Überschreitet die Unterschreitungsdauer den weiteren vordefinierten Schwellenwert, so legt die Steuereinrichtung 85 den Steuerzustand der Wärmequelle 20 für die entsprechende Stunde der Erfassungszeit t in dem Zeitschaltplan des Steuerparameters 91 als aktiviert fest. Unterschreitet die Unterschreitungsdauer den weiteren vordefinierten Schwellenwert, so legt die Steuereinrichtung 85 den Steuerzustand der Wärmequelle 20 in dem Zeitschaltplan 91 als deaktiviert fest.

Zusätzlich ist denkbar, dass die Steuereinrichtung 85 den Betriebszustand des Heizkreislaufs 25 und/oder der Wärmequelle 20 zur jeweils zugeordneten Erfassungszeit t überprüft. Die Steuereinrichtung 85 ignoriert das Ergebnis des Vergleichs vom fünften Verfahrensschritt 220, wenn zu der Erfassungszeit t und dem Unterschreiten des vordefinierten Schwellenwerts durch die Änderung dT/dt der Temperatur T ein aktiver Betriebszustand des Heizkreislaufs 25 und/oder Wärmequelle 20 vorliegt.

Dabei kann vorgesehen sein, dass für einen vorbestimmten Zeitraum nach und gegebenenfalls auch vor einem aktiven Betriebszustand der vordefinierte Zeitraum als aktiver Betriebszustand des Heizkreislaufs 25 und/oder der Wärmequelle 20 gewertet wird, obwohl der Heizkreislauf 25 und/oder die Wärmequelle 20 in diesem Zeitraum bereits deaktiviert ist. Auf diese Weise können intern im Wärmespeicher 15 nach Aktivierung des Heizkreislaufs 25 und/oder der Wärmequelle 20 entstehende Mischströmungen ausgeblendet werden.

In einem siebten Verfahrensschritt 230 ermittelt die Steuereinrichtung 85 eine aktuelle Zeit (in der Ausführungsform den Wochentag und die Uhrzeit). Auf Grundlage der aktuellen Zeit ermittelt die Steuereinrichtung 85 den zu der Zeit zugeordneten Steuerzustand der Wärmequelle 20 auf Grundlage des Steuerparameters 91. Dabei kann die Zuordnung der im Steuerparameter 91 abgelegten Stunde durch eine Übereinstimmung in einem Vergleich der ganzzahligen Stundenangabe der Uhrzeit und mit der im Steuerparameter 91 abgelegten Stunde ermittelt werden. Beispielsweise ermittelt die Steuereinrichtung 85 als aktuelle Zeit Tag 4, 20:53. Zu dieser Zeit ist in dem Zeitschaltplan für den Tag 4 und die Stunde 20 der Steuerzustand "aktiv" abgelegt. Auf Grundlage des im Steuerparameter 91 abgelegten Steuerzustands (aktivierte oder deaktiverte Wärmequelle 20) ermittelt die Steuereinrichtung 85 das Steuersignal zur Steuerung der Wärmequelle 20 und stellt das ermittelte Steuersignal der Schnittstelle 90 bereit. Die Wärmequelle 20 erfasst das Steuersignal.

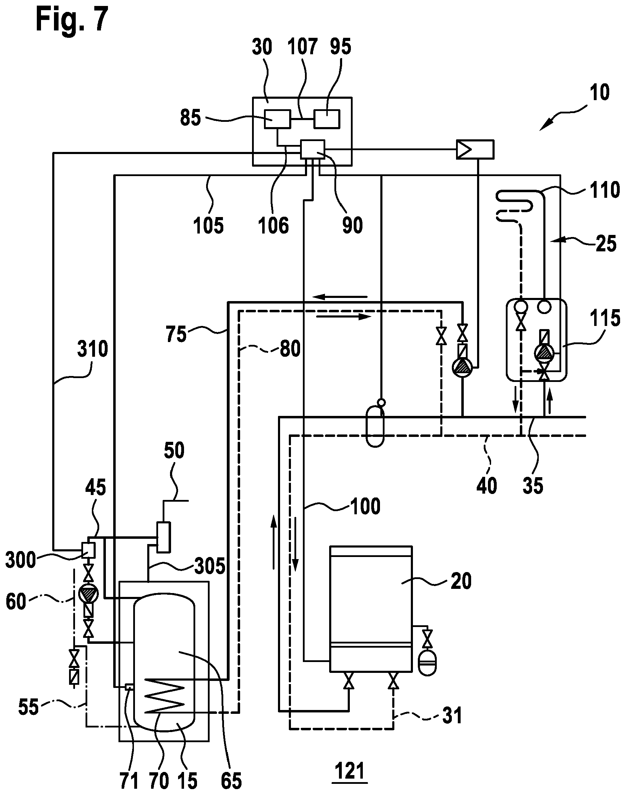

Figur 7 zeigt eine schematische Darstellung eines Warmwassersystems 10 gemäß einer zweiten Ausführungsform. Das Warmwassersystem 10 ist dabei ähnlich zu dem in Figur 1 erläuterten Warmwassersystem 10 ausgebildet. Zusätzlich weist das Warmwassersystem 10 eine Zirkulationspumpe 300 auf. Die Zirkulationspumpe 300 ist dabei in der dritten Leitung 45 angeordnet. Ferner ist eine siebte Leitung 305 vorgesehen, die als Rücklaufleitung von der Entnahmestation 50 hin zum Wärmespeicher 15 dient und die Entnahmestation 50 mit dem Wärmespeicher 15 fluidisch verbindet. Die Zirkulationspumpe 300 ist ferner über eine fünfte Verbindung 310 mit der Schnittstelle 90 des Steuergeräts 30 verbunden.

Das Steuergerät 30 steuert mittels eines weiteren Steuersignals, das über die dritte Verbindung 106 der Schnittstelle 90 und über die fünfte Verbindung 310 der Zirkulationspumpe 300 bereitgestellt wird, die Zirkulationspumpe 300 auf Grundlage eines zusätzlich im Datenspeicher 95 abgelegten Steueralgorithmus.

Alternativ ist auch denkbar, dass über die fünfte Verbindung 310 und die Schnittstelle 90 ein Betriebszustand der Zirkulationspumpe 300 durch die Steuereinrichtung 85 erfasst wird. Die Erfassung des Betriebszustands kann beispielsweise darauf reduziert sein, ob die Zirkulationspumpe 300 aktiviert oder deaktiviert ist. Selbstverständlich ist auch denkbar, dass die Steuereinrichtung 85 eine Leistungs- und/oder Förderinformation der Zirkulationspumpe 300 erfasst.

Bei Betrieb der Zirkulationspumpe 300 wird warmes Frischwasser 65 aus dem Wärmespeicher 15 entnommen und über die dritte Leitung 45 zur Entnahmestation 50 gefördert. Wird die Entnahmestation 50 nicht geöffnet, so wird das warme Frischwasser 65 über die siebte Leitung 305 wieder zurück in den Wärmespeicher 15 befördert. Dabei fließt das warme Frischwasser 65 in kalter Umgebung 121, sodass das über die siebte Leitung 305 zurückgeleitete Frischwasser 65 kälter ist als das aus dem Wärmespeicher 15 entnommene warme Frischwasser 65. Dies führt zu einer Abkühlung des im Wärmespeicher 15 vorhandenen warmen Frischwassers 65, was in den in Figuren 3 bis 6 gezeigten Graphen zu einer Änderung dT/dt der Temperatur T, die größer ist als der vorgegebene Schwellenwert, führt.

Die Zirkulationspumpe 300 hat den Vorteil, dass, wenn die Entnahmestation 50 geöffnet wird, zeitnah warmes Frischwasser 65 dem Nutzer zur Verfügung steht, ohne dass zuerst kaltes Frischwasser 65 aus der Entnahmestation 50 entnommen werden muss bis das warme Frischwasser 65 von dem Wärmespeicher 15 über die dritte Leitung 45 hin zur Entnahmestation 50, wie in Figur 1 gezeigt, nachgeflossen ist. Dadurch kann der Komfort für den Nutzer des Warmwasserssystems 10 erhöht werden.

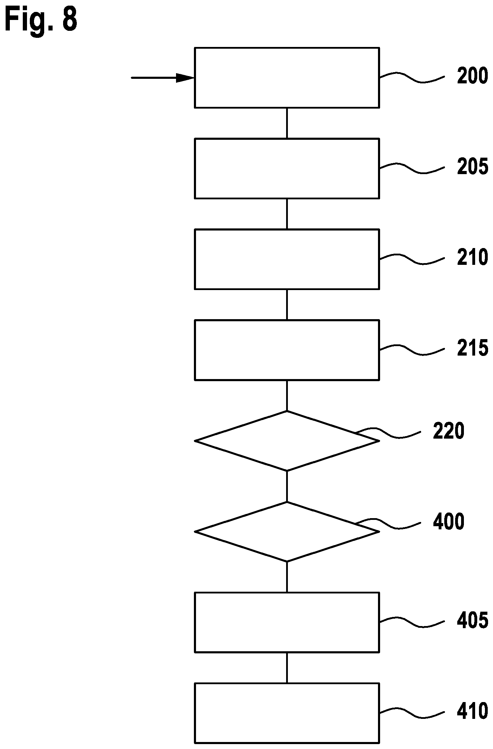

Figur 8 zeigt ein Ablaufdiagramm des in Figur 7 gezeigten Warmwasserssystems 10.

Das Verfahren zum Betrieb des Warmwasserssystems 10 ist in Teilen identisch mit dem in Figur 6 erläuterten Verfahren. Abweichend dazu wird im ersten Verfahrensschritt 200 zusätzlich zu dem Temperatursignal der Betriebszustand der Zirkulationspumpe 300 erfasst. Dies kann dadurch erfolgen, dass das an die Zirkulationspumpe 300 gesendete Steuersignal durch die Steuereinrichtung 85 ausgewertet wird oder der Betriebszustand durch die Steuereinrichtung 85 erfasst wird (vgl. Figur 7). Hierbei ist nur von Relevanz, ob die Zirkulationspumpe 300 aktiviert oder deaktiviert ist.

Im zweiten Verfahrensschritt 205 ordnet die Steuereinrichtung 85 zusätzlich dem in Figur 6 beschriebenen zweiten Verfahrensschritt 205 dem erfassten Betriebszustand der Zirkulationspumpe 300 die Erfassungszeit t zu.

Im dritten Verfahrensschritt 210 speichert die Steuereinrichtung 85 zusätzlich zu dem in Figur 6 beschriebenen dritten Verfahrensschritt 210 den Betriebszustand mit der zugeordneten Erfassungszeit t im Datenspeicher 95 ab.

Der vierte und fünfte Verfahrensschritt 215, 220 sind identisch mit dem in Figur 6 beschriebenen vierten und fünften Verfahrensschritt 215, 220.

Zusätzlich ist nach dem fünften Verfahrensschritt 220 ein sechster Verfahrensschritt 400 vorgesehen. Im sechsten Verfahrensschritt 600 überprüft die Steuereinrichtung 85 den Betriebszustand der Zirkulationspumpe 300 zur jeweils zugeordneten Erfassungszeit t. Die Steuereinrichtung 85 ignoriert das Ergebnis des Vergleichs vom fünften Verfahrensschritt 220, wenn zu der Erfassungszeit t und dem Unterschreiten des vordefinierten Schwellenwerts durch die Änderung dT/dt der Temperatur T ein aktiver Betriebszustand der Zirkulationspumpe 300 vorliegt, also die Zirkulationspumpe 300 in Betrieb ist.

Dabei kann vorgesehen sein, dass für einen vorbestimmten Zeitraum nach einem aktiven Betriebszustand der Zirkulationspumpe 300 und gegebenenfalls auch vor dem aktiven Betriebszustand der Zirkulationspumpe 300 der vordefinierte Zeitraum als aktiv geschaltete Zirkulationspumpe 300 gewertet wird, obwohl die Zirkulationspumpe 300 in diesem Zeitraum bereits deaktiviert ist. Auf diese Weise können intern im Wärmespeicher 15 nach Aktivierung der Zirkulationspumpe 300 entstehende Mischströmungen ausgeblendet werden.

Auf den sechsten Verfahrensschritt 400 folgt ein siebter Verfahrensschritt 405. Der siebte Verfahrensschritt 405 entspricht dabei im Wesentlichen dem in Figur 6 erläuterten sechsten Verfahrensschritt 225. In einem achten Verfahrensschritt 410 steuert die Steuereinrichtung 85 die Wärmequelle 20 in Abhängigkeit des Steuerparameters 91. Dieser Verfahrensschritt entspricht im Wesentlichen dem in Figur 6 erläuterten siebten Verfahrensschritt 230.

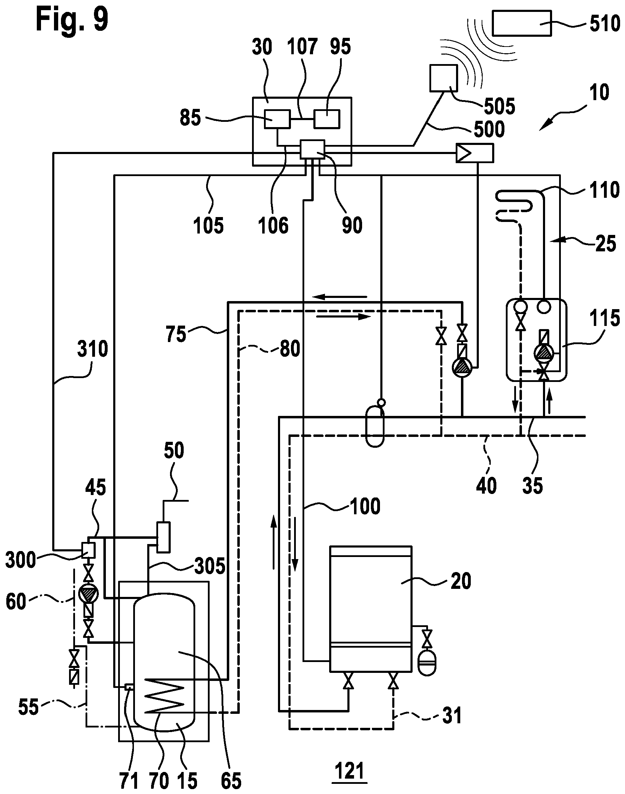

Figur 9 zeigt eine schematische Darstellung eines Warmwasserssystems 10 gemäß einer dritten Ausführungsform. Das Warmwassersystem 10 ist ähnlich zu dem in den Figuren 1 und 7 gezeigten Warmwassersystemen 10 ausgebildet. Abweichend dazu ist die Schnittstelle 90 mittels einer sechsten Verbindung 500 mit einer Erfassungseinrichtung 505 verbunden. Die Erfassungseinrichtung 505 ist ausgebildet, die Anwesenheit des Nutzers in dem Gebäude zu erfassen und ein zur Anwesenheit des Nutzers korrelierendes Nutzersignal der Schnittstelle 90 über die sechste Verbindung 500 bereitzustellen. Die Schnittstelle 90 stellt das Nutzersignal über die dritte Verbindung 106 der Steuereinrichtung 85 des Steuergeräts 30 bereit.

Die Erfassungseinrichtung 505 kann beispielsweise einen Bewegungssensor aufweisen. Der Bewegungssensor kann dabei beispielsweise mittels der Detektion von Infrarotstrahlung die Anwesenheit des Nutzers erfassen.

Alternativ oder zusätzlich ist auch denkbar, dass die Erfassungseinrichtung 505 einen Nahfeldempfänger zur Erfassung von Nahfeldkommunikationsdatensignalen eines mobilen Endgeräts 510 des Nutzers erfasst. Dabei kann der Nahfeldempfänger beispielsweise gemäß dem Bluetoothstandard zumindest ein Datensignal des mobilen Endgeräts 510 des Nutzers umfassen. Selbstverständlich ist auch denkbar, dass der Nahfeldempfänger anders ausgebildet ist und ein anderes Nahfelddatensignal erfasst. Auch ist denkbar, dass die Erfassungseinrichtung 505 Daten zwischen dem mobilen Endgerät 510 austauscht.

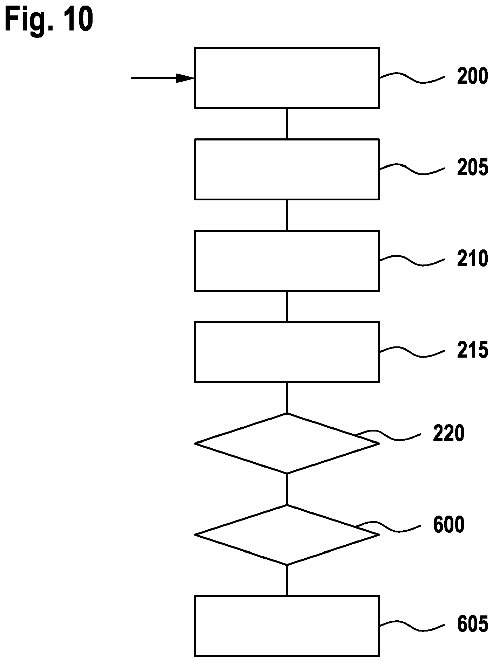

Figur 10 zeigt ein Ablaufdiagramm eines Verfahrens zum Betrieb des in Figur 9 gezeigten Warmwasserssystems 10. Das Verfahren ist im Wesentlichen identisch zu dem in Figur 6 beschriebenen Verfahren.

Abweichend dazu wird in dem ersten Verfahrensschritt 200 zusätzlich zu dem Temperatursignal das Nutzersignal der Erfassungseinrichtung 505 durch die Schnittstelle 90 erfasst und der Steuereinrichtung 85 zur Verfügung gestellt.

Im zweiten Verfahrensschritt 205 wird zusätzlich zu dem in Figur 6 beschriebenen zweiten Verfahrensschritt 205 dem Nutzersignal die Erfassungszeit t zugeordnet.

Die dritten bis fünften Verfahrensschritte 210, 215, 220 sind dabei identisch zu den in Figur 6 beschriebenen dritten bis fünften Verfahrensschritte 210, 215, 220.

Nach dem fünften Verfahrensschritt 220 ist ein zusätzlicher sechster Verfahrensschritt 600 vorgesehen. Im sechsten Verfahrensschritt 600 wird das Ergebnis des Vergleichs vom fünften Verfahrensschritt 220 überprüft.

Dabei wird das zur Erfassungszeit t zugeordnete Nutzersignal mit dem Ergebnis des Vergleichs vom fünften Verfahrensschritt 220 verglichen.

In dem Fall, dass das Nutzersignal mit einer Anwesenheit des Nutzers korreliert und das Ergebnis des Vergleichs vom fünften Verfahrensschritt 220 das Unterschreiten des vordefinierten Schwellenwerts durch die Temperaturänderung dT/dt zur gleichen Erfassungszeit t zeigt, legt die Steuereinrichtung 85 in einem siebten Verfahrensschritt 605, der dem in Figur 6 beschriebenen fünften Verfahrensschritt 225 entspricht, den Steuerzustand für die Wärmequelle 20 als aktiv fest.

In dem Fall, dass das Nutzersignal mit einer Abwesenheit des Nutzers korreliert und das Ergebnis des Vergleichs vom fünften Verfahrensschritt 220 das Unterschreiten des vordefinierten Schwellenwerts durch die Temperaturänderung dT/dt zur gleichen Erfassungszeit t zeigt, legt die Steuereinrichtung in dem siebten Verfahrensschritt 605 den Steuerzustand für die Wärmequelle 20 als deaktiviert fest.

Auf diese Weise können Fehlmessungen des Temperatursensors 71 durch Mischströmungen im Wärmespeicher 15 und damit einhergehend eine Fehlfestlegung des Steuerparameters 91 vermieden werden.

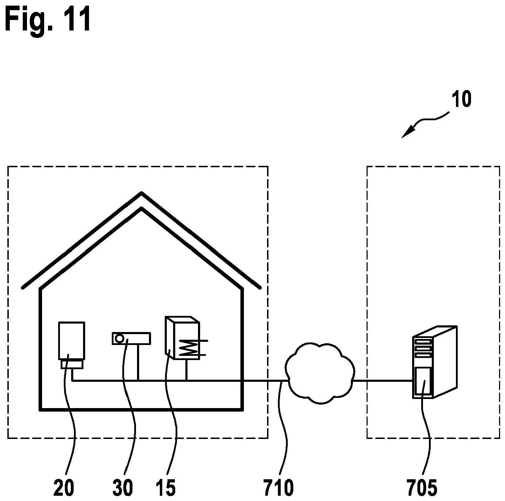

Figur 11 zeigt eine schematische Darstellung eines Warmwasserssystems 10 gemäß einer vierten Ausführungsform. Das Warmwassersystem 10 ist ähnlich zu dem in den Figuren 1, 7, 9 gezeigten Warmwassersystemen 10 ausgebildet. Abweichend dazu umfasst das Warmwassersystem 10 zusätzlich einen Zentralrechner 705. Der Zentralrechner 705 kann dabei beispielsweise als Backend und/oder als Cloud und/oder als Server ausgebildet sein. Das Steuergerät 30 ist über die Schnittstelle 90 und eine Datenverbindung 710 mit dem Zentralrechner 705 verbunden. Im Vergleich zu dem in den Figuren 1, 7, 9 gezeigten Steuergerät 30 ist diese durch das in Figur 11 gezeigte Steuergerät 30 und den Zentralrechner 705 zweiteilig ausgebildet. In der Ausführungsform ist der Zentralrechner 705 räumlich getrennt von dem Steuergerät 30 angeordnet. Die Datenverbindung 710 kann dabei beispielsweise als Internetverbindung ausgebildet sein. Selbstverständlich ist auch denkbar, dass die Datenverbindung 710 andersartig ausgebildet ist.

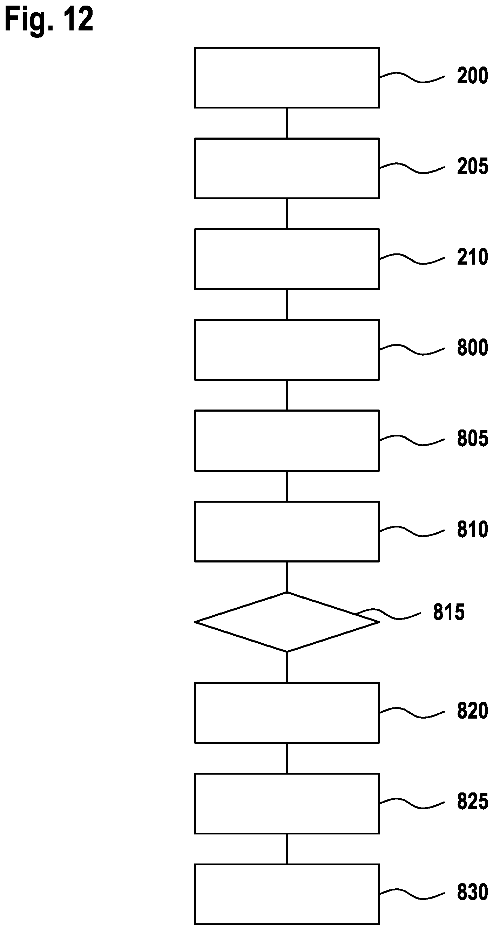

Figur 12 zeigt ein Ablaufdiagramm eines Verfahrens zum Betrieb des in Figur 11 gezeigten Warmwasserssystems 10.

Der erste bis dritte Verfahrensschritt 200, 205, 210 entsprechen den in Figur 6 erläuterten ersten bis dritten Verfahrensschritt 200, 205, 210.

Nach dem dritten Verfahrensschritt 210 ist ein vierter Verfahrensschritt 800 vorgesehen. Im vierten Verfahrensschritt 800 werden die gespeicherten Temperaturen T zusammen mit der jeweiligen zu der Temperatur T zugeordneten Erfassungszeit t über die Datenverbindung 710 von dem Steuergerät 30 an den Zentralrechner 705 gesammelt in einem oder mehreren Datenpaketen übertragen.

Auf den vierten Verfahrensschritt 800 folgt ein fünfter Verfahrensschritt 805. Im fünften Verfahrensschritt 805, der fakultativ ist, führt der Zentralrechner 705 ein sogenanntes Preprocessing durch. Dabei werden die im Datenpaket zusammengefassten Daten von einem für das Steuergerät 30 verwendbaren Datenstandard in einen für den Zentralrechner 705 verwendbaren Datenstandard konvertiert. Auch kann hierbei zusätzlich eine erste Auswertung und/oder Löschung von unnötig gespeicherten Daten des Steuergeräts 30 vorgenommen werden.

Auf den fünften Verfahrensschritt 805 folgt ein sechster Verfahrensschritt 810. Der sechste Verfahrensschritt 810 entspricht dabei dem in Figur 6 erläuterten vierten Verfahrensschritt 215. Der sechste Verfahrensschritt 810 wird dabei vom Zentralrechner 705 durchgeführt. Dabei ermittelt der Zentralrechner 705 die Änderung dT/dt der Temperatur über die Erfassungszeit t.

In einem siebten Verfahrensschritt 815, der auf den sechsten Verfahrensschritt folgt, führt der Zentralrechner 705 den Vergleich der Änderung dT/dt mit dem vordefinierten Schwellenwert durch. Der siebte Verfahrensschritt 815 entspricht dabei dem in Figur 6 erläuterten fünften Verfahrensschritt 220.

In einem achten Verfahrensschritt 820, der auf den siebten Verfahrensschritt 815 folgt, legt der Zentralrechner 705 in Abhängigkeit des Ergebnisses des im siebten Verfahrensschritt durchgeführten Vergleichs den Steuerparameter 91 fest. Der achte Verfahrensschritt entspricht dabei dem in Figur 6 erläuterten sechsten Verfahrensschritt 225.

Zusätzlich ist denkbar, dass, sollten sich die ermittelten Daten über einen längeren Zeitraum, beispielsweise über wenigstens 48 Stunden, erstrecken, zwischen dem siebten und achten Verfahrensschritt 820, 820 ein zusätzlicher Zwischenschritt vorgesehen. Dazu ist in dem Zentralrechner 705 ein Auswerteparameter abgelegt, der in der Ausführungsform als Data-Mining-Algorithmus ausgebildet ist. Der Data-Mining-Algorithmus kann beispielsweise ein Decision Table Algorithmus oder ein Random Forest Algorithmus sein. Selbstverständlich ist auch denkbar, dass der Auswerteparameter anders ausgebildet ist. Mittels des Auswerteparameters wertet der Zentralrechner 705 das Ergebnis des Vergleichs in Abhängigkeit der Erfassungszeit t aus. Auf Grundlage der Auswertung mittels des Auswerteparameters legt der Zentralrechner 705 den Steuerparameter 91 fest. Auf diese Weise kann der Steuerparameter 91 verbessert festgelegt werden. Insbesondere kann hierbei eine verbesserte Festlegung des Steuerzustands der Wärmequelle 20 hinsichtlich Wochentag und Wochenendtagen, saisonalen Informationen, wie Ferien, Wetterinformationen oder Feiertagen festgelegt werden.

Ist der Steuerparameter 91 (vollständig) durch den Zentralrechner 705 festgelegt, so wird in einem neunten Verfahrensschritt 825, der auf den achten Verfahrensschritt 820 folgt, der Steuerparameter 91 mittels der Datenverbindung 710 an das Steuergerät 30 übertragen. Die Steuereinrichtung 85 Datenspeichert den übertragenen Steuerparameter 91 in dem Datenspeicher 95. Mittels des Steuerparameters 91 kann dann die Steuereinrichtung 85 die Wärmequelle 20 in einem zehnten Verfahrensschritt 830 steuern.

Die Kombination des Steuergeräts 30 mit dem Zentralrechner 705 hat jedoch den Vorteil, dass die für das Steuergerät 30 notwendigen Komponenten einfach und kostengünstig sind, da rechenintensive Prozesse, wie der vierte bis achte Verfahrensschritt 800, 805, 810, 815, 820 sowie gegebenenfalls der Zusatzschritt, auf dem Zentralrechner 705 ausgelagert sind.

Die oben beschriebenen Ausgestaltungen des Warmwasserssystems 10 haben den Vorteil, dass auf einfache Weise der Steuerparameter 91, insbesondere der Zeitschaltplan, zum Betrieb der Wärmequelle 20 zum Erwärmen des Frischwassers 65 festgelegt werden kann, ohne dass hierfür der Nutzer über eine Ein- und Ausgabeeinrichtung den Zeitschaltplan festlegen muss. Dadurch kann der Nutzerkomfort des Warmwasserssystems 10 für den Nutzer erheblich gesteigert werden. Ferner wird vermieden, dass die Wärmequelle 20 aktiviert wird, ohne dass Frischwasser 65 aus dem Wärmespeicher 15 entnommen wird. Dadurch kann der Energieaufwand zum Betrieb der Wärmequelle 20 reduziert werden.

Ferner haben die oben beschriebenen Ausgestaltungen den Vorteil, dass auf einen Durchflusssensor zur Erfassung von Frischwasser 65 über die Entnahmestation 50 verzichtet werden kann. Dadurch können die Investitionskosten für das Warmwassersystem 10 gering gehalten werden. Ferner kann durch eine regelmäßige Auswertung der Entnahme von Frischwasser 65 eine automatische Anpassung des Steuerparameters 91 zur Steuerung des Warmwasserssystems 10 erfolgen, ohne dass hierfür ein Nutzereingriff am Steuergerät 30 notwendig ist.

Es wird darauf hingewiesen, dass die oben beschrieben Merkmale der unterschiedlichen Ausführungsformen selbstverständlich miteinander kombiniert werden können.

## Patentansprüche

1. Steuergerät (30) für ein Warmwassersystem (10) mit einem Wärmespeicher (15);
- aufweisend eine Schnittstelle (90), eine Steuereinrichtung (85) und einen Datenspeicher (95);
- wobei die Steuereinrichtung (85) mit der Schnittstelle (90) und dem Datenspeicher (95) verbunden ist,
- wobei die Schnittstelle (90) mit einem Temperatursensor (71) des Wärmespeichers (15) verbindbar und ausgebildet ist, ein mit einer Temperatur (T) eines in dem Wärmespeicher (15) anordenbaren Wärmespeichermediums (65) korrelierende Temperatursignal des Temperatursensors (71) zu erfassen und der Steuereinrichtung (85) zur Verfügung zu stellen,
- wobei in dem Datenspeicher (95) ein vordefinierter Schwellenwert abgelegt ist,
- wobei die Steuereinrichtung (85) ausgebildet ist, der erfassten Temperatur (T) eine Erfassungszeit (t) zuzuordnen,
- wobei die Steuereinrichtung (85) ausgebildet ist, eine Änderung der Temperatur (T) über die Erfassungszeit (t) zu ermitteln (dT/dt),
- wobei die Steuereinrichtung (85) ausgebildet ist, die ermittelte Änderung (dT/dt) mit dem vordefinierten Schwellenwert in einem Vergleich zu vergleichen,
- wobei die Steuereinrichtung (85) ausgebildet ist, in Abhängigkeit eines Ergebnisses des Vergleichs einen Steuerparameter (91) in dem Datenspeicher (95) zu Steuerung einer Wärmequelle (20) des Warmwassersystems (10) festzulegen,
- **dadurch gekennzeichnet, dass**
- wobei die Schnittstelle (90) mit einer Zirkulationspumpe (300) verbindbar ist,
- wobei die Steuereinrichtung (85) ausbildet ist, einen Betrieb der Zirkulationspumpe (300) zu erfassen,
- wobei die die Steuereinrichtung (85) ausgebildet ist, einen Betriebszustand der Zirkulationspumpe (300) zur jeweils zugeordneten Erfassungszeit (t) zu überprüfen,
- wobei die Steuereinrichtung (85) ausgebildet ist, das Ergebnis des Vergleichs zu ignorieren, wenn zu der Erfassungszeit (t) und dem Unterschreiten des vordefinierten Schwellenwerts durch die Änderung (dT/dt) der Temperatur (T) ein aktiver Betriebszustand der Zirkulationspumpe (300) vorliegt.

2. Steuergerät (30) nach Anspruch 1, wobei der Schwellenwert einen Wert aufweist, der kleiner oder gleich einer auskühlungsbedingten Änderung der Temperatur (T) des Wärmespeichermediums (65) über die Erfassungszeit (t) ist.

3. Steuergerät (30) nach Anspruch 1 oder 2,
- wobei der Steuerparameter (91) als Zeitschaltplan ausgebildet ist.

4. Steuergerät (30) nach einem der Ansprüche 1 bis 3,
- wobei in dem Datenspeicher (95) ein Auswerteparameter abgelegt ist,
- wobei das Steuergerät (30) ausgebildet ist, den Steuerparameter (91) in Abhängigkeit des Ergebnisses des Vergleichs und des Auswerteparameters zu ermitteln.

5. Warmwassersystem (10)
- aufweisend einen Wärmespeicher (15) und ein Steuergerät (30) nach einem der Ansprüche 1 bis 4,
- wobei der Wärmespeicher (15) mit einem Wärmespeichermedium (65) füllbar ist,
- wobei der Wärmespeicher (15) einen Temperatursensor (71) umfasst,
- wobei der Temperatursensor (71) mit der Schnittstelle (90) des Steuergeräts (30) verbunden ist,
- wobei der Temperatursensor (71) ausgebildet ist, eine Temperatur (T) des Wärmespeichermediums (65) zu erfassen und ein zur erfassten Temperatur (T) korrespondierendes Temperatursignal bereitzustellen.

6. Warmwassersystem (10) nach Anspruch 5,
- aufweisend eine Wärmequelle (20),
- wobei die Wärmequelle (20) mit dem Wärmespeicher (15) gekoppelt und mit der Schnittstelle (90) des Steuergeräts (30) verbunden ist,
- wobei das Steuergerät (30) ausgebildet ist, auf Grundlage des Steuerparameters (91) die Wärmequelle (20) zur Erwärmung des Wärmespeichermediums (65) zu steuern.

7. Warmwassersystem (10) nach Anspruch 5 oder 6,
- wobei eine Erfassungseinrichtung (505) vorgesehen ist,
- wobei die Erfassungseinrichtung (505) mit der Schnittstelle (90) des Steuergeräts (30) verbunden ist,
- wobei die Erfassungseinrichtung (505) ausgebildet ist, eine Anwesenheit eines Nutzers in einem Gebäude zu erfassen und ein zur Anwesenheit des Nutzers korrelierendes Nutzersignal der Steuereinrichtung (85) bereitzustellen,
- wobei die Steuereinrichtung (85) ausgebildet ist, das Nutzersignal bei der Ermittlung des Steuerparameters (91) zu berücksichtigen.

8. Warmwassersystem (10) nach Anspruch 7,wobei die Erfassungseinrichtung (505) wenigstens einen Bewegungssensor und/oder einen Nahfeldempfänger umfassen.

9. Verfahren zum Betrieb eines Steuergerät (30) nach einem der Ansprüche 1 bis 4 und/oder eines Warmwassersystems (10) nach einem der Ansprüche 5 bis 8,
- wobei eine Temperatur (T) eines Wärmespeichermediums (65) in einem Wärmespeicher (15) erfasst wird;
- wobei der erfassten Temperatur (T) eine Erfassungszeit (t) zugeordnet wird,
- wobei eine Änderung (dT/dt) der Temperatur (T) über die Erfassungszeit (t) ermittelt wird,
- wobei die Änderung (dT/dt) mit einem vordefiniertem Schwellenwert in einem Vergleich verglichen wird,
- wobei ein Betriebszustand der Zirkulationspumpe (300) zur jeweils zugeordneten Erfassungszeit (t) überprüft wird,
- wobei das Ergebnis des Vergleichs ignoriert wird, wenn zu der Erfassungszeit (t) und dem Unterschreiten des vordefinierten Schwellenwerts durch die Änderung (dT/dt) der Temperatur (T) ein aktiver Betriebszustand der Zirkulationspumpe (300) vorliegt,
- wobei in Abhängigkeit eines Ergebnisses des Vergleichs ein Steuerparameter (91) festgelegt wird.

## Claims

1. Control device (30) for a hot water system (10) having a thermal store (15);
- having an interface (90), a controller (85) and a data memory (95);
- the controller (85) being connected to the interface (90) and the data memory (95),
- the interface (90) being connectable to a temperature sensor (71) of the thermal store (15) and being designed to measure a temperature signal from the temperature sensor (71) which correlates with a temperature (T) of a thermal storage medium (65) that can be arranged in the thermal store (15) and to provide the said signal to the controller (85),
- a predefined threshold value being stored in the data memory (95),
- the controller (85) being designed to assign a measurement time (t) to the acquired temperature (T),
- the controller (85) being designed to determine a change (dT/dt) in the temperature (T) over the measurement time (t),
- the controller (85) being designed to compare the determined change (dT/dt) with a predefined threshold value in a comparison,
- the controller (85) being designed to define a control parameter (91) in the data memory (95) to control a heat source (20) of the hot water system (10) on the basis of a result of the comparison,
- **characterized in that**
- wherein the interface (90) can be connected to a circulation pump (300),
- wherein the controller (85) is designed to detect an operation of the circulation pump (300),
- wherein the controller (85) is designed to check an operating state of the circulation pump (300) at the respectively associated measurement time (t),
- wherein the controller (85) is designed to ignore the result of the comparison when there is an active operating state of the circulation pump (300) at the measurement time (t) and when the change (dT/dt) in the temperature (T) falls below the predefined threshold value.

2. Control device (30) according to Claim 1, wherein the threshold value has a value which is less than or equal to a cooling-induced change in the temperature (T) of the thermal storage medium (65) over the measurement time (t).

3. Control device (30) according to Claim 1 or 2,
- wherein the control parameter (91) is formed as a schedule.

4. Control device (30) according to one of Claims 1 to 3,
- wherein an evaluation parameter is stored in the data memory (95),
- wherein the control device (30) is designed to determine the control parameter (91) on the basis of the result of the comparison and of the evaluation parameter.

5. Hot water system (10),
- having a thermal store (15) and a control device (30) according to one of Claims 1 to 4,
- wherein the thermal store (15) can be filled with a thermal storage medium (65),
- wherein the thermal store (15) comprises a temperature sensor (71),
- wherein the temperature sensor (71) is connected to the interface (90) of the control device (30),
- wherein the temperature sensor (71) is designed to measure a temperature (T) of the thermal storage medium (65) and to provide a temperature signal corresponding to the detected temperature (T).

6. Hot water system (10) according to Claim 5,
- having a heat source (20),
- wherein the heat source (20) is coupled to the thermal store (15) and is connected to the interface (90) of the control device (30),
- wherein the control device (30) is designed to control the heat source (20) for heating the thermal storage medium (65) on the basis of the control parameter (91).

7. Hot water system (10) according to Claim 5 or 6,
- wherein a detector (505) is provided,
- wherein the detector (505) is connected to the interface (90) of the control device (30),
- wherein the detector (505) is designed to detect the presence of a user in the building and to provide a user signal correlating with the presence of the user to the controller (85),
- wherein the controller (85) is designed to take the user signal into account when determining the control parameter (91).

8. Hot water system (10) according to Claim 7, wherein the detector (505) comprises at least one movement sensor and/or a near-field receiver.

9. Method for operating a control device (30) according to one of Claims 1 to 4 and/or a hot water system (10) according to one of Claims 5 to 8,
- wherein a temperature (T) of a thermal storage medium (65) in a thermal store (15) is measured,
- wherein the measured temperature (T) is assigned a measurement time (t),
- wherein a change (dT/dt) in the temperature (T) over the measurement time (t) is determined,
- wherein the change (dT/dt) is compared with a predefined threshold value in a comparison,
- wherein an operating state of the circulation pump (300) at the respectively associated measurement time (t) is checked,
- wherein the result of the comparison is ignored when there is an active operating state of the circulation pump (300) at the measurement time (t) and when the change (dT/dt) in the temperature (T) falls below the predefined threshold value,
- wherein a control parameter (91) is defined on the basis of a result of the comparison.

## Revendications

1. Appareil de commande (30) destiné à un système d'eau chaude (10) comportant un accumulateur de chaleur (15) ;
- comprenant une interface (90), un dispositif de commande (85) et une mémoire de données (95) ;
- dans lequel le dispositif de commande (85) est relié à l'interface (90) et à la mémoire de données (95) ;
- dans lequel l'interface (90) peut être reliée à un capteur de température (71) de l'accumulateur de chaleur (15) et est conçue pour détecter un signal de température provenant du capteur de température (71), corrélé à une température (T) d'un milieu accumulateur de chaleur (65) pouvant être placé dans l'accumulateur de chaleur (15), et pour le délivrer au dispositif de commande (85),
- dans lequel une valeur de seuil prédéfinie est stockée dans la mémoire de données (95),
- dans lequel le dispositif de commande (85) est conçu pour associer un temps de détection (t) à la température (T) détectée,
- dans lequel le dispositif de commande (85) est conçu pour déterminer une variation (dT/dt) de la température (T) au cours du temps de détection (t),
- dans lequel le dispositif de commande (85) est conçu pour comparer lors de la comparaison la variation (dT/dt) déterminée à la valeur de seuil prédéfinie,
- dans lequel le dispositif de commande (85) est conçu pour établir un paramètre de commande (91), en fonction d'un résultat de la comparaison, dans la mémoire de données (95) afin de commander une source de chaleur (20) du système d'eau chaude (10),
- **caractérisé en ce que**
- dans lequel l'interface (90) peut être reliée à une pompe de circulation (300),
- dans lequel le dispositif de commande (85) est conçu pour détecter un fonctionnement de la pompe de circulation (300),
- dans lequel le dispositif de commande (85) est conçu pour vérifier un état de fonctionnement de la pompe de circulation (300) au temps de détection (t) respectif associé,
- dans lequel le dispositif de commande (85) est conçu pour ignorer le résultat de la comparaison lorsqu'un état de fonctionnement actif de la pompe de circulation (300) est présent au temps de détection (t) et en cas d'abaissement de la variation (dT/dt) de la température (T) en dessous de la valeur de seuil prédéfinie.

2. Appareil de commande (30) selon la revendication 1, dans lequel la valeur de seuil présente une valeur qui est inférieure ou égale à une variation, liée au refroidissement, de la température (T) du milieu accumulateur de chaleur (65) au cours du temps de détection (t).

3. Appareil de commande (30) selon la revendication 1 ou 2,
- dans lequel le paramètre de commande (91) est mis en oeuvre sous la forme d'un plan de temporisation.

4. Appareil de commande (30) selon l'une des revendications 1 à 3,
- dans lequel un paramètre d'évaluation est stocké dans la mémoire de données (95),
- dans lequel l'appareil de commande (30) est conçu pour déterminer le paramètre de commande (91) en fonction du résultat de la comparaison et du paramètre d'évaluation.

5. Système d'eau chaude (10),
- comportant un accumulateur de chaleur (15) et un appareil de commande (30) selon l'une des revendications 1 à 4,
- dans lequel l'accumulateur de chaleur (15) peut être rempli avec le milieu accumulateur de chaleur (65),
- dans lequel l'accumulateur de chaleur (15) comprend un capteur de température (71),
- dans lequel le capteur de température (71) est relié à l'interface (90) de l'appareil de commande (30),
- dans lequel le capteur de température (71) est conçu pour détecter une température (T) du milieu accumulateur de chaleur (65) et pour fournir un signal de température correspondant à la température (T) détectée.

6. Système d'eau chaude (10) selon la revendication 5,
- comportant une source de chaleur (20),
- dans lequel la source de chaleur (20) est couplée à l'accumulateur de chaleur (15) et est reliée à l'interface (90) de l'appareil de commande (30),
- dans lequel l'appareil de commande (30) est conçu pour commander la source de chaleur (20) sur la base du paramètre de commande (91) pour chauffer le milieu accumulateur de chaleur (65).

7. Système d'eau chaude (10) selon la revendication 5 ou 6,
- dans lequel il est prévu un dispositif de détection (505),
- dans lequel le dispositif de détection (505) est relié à l'interface (90) de l'appareil de commande (30),
- dans lequel le dispositif de détection (505) est conçu pour détecter la présence d'un utilisateur dans un bâtiment et pour fournir au dispositif de commande (85) un signal d'utilisateur corrélé à la présence de l'utilisateur,
- dans lequel le dispositif de commande (85) est conçu pour tenir compte du signal d'utilisateur lors de la détermination du paramètre de commande (91).

8. Système d'eau chaude (10) selon la revendication 7, dans lequel le dispositif de détection (505) comprend au moins un capteur de mouvement et/ou un récepteur de champ proche.

9. Procédé de mise en fonctionnement d'un appareil de commande (30) selon l'une des revendications 1 à 4 et/ou d'un système d'eau chaude (10) selon l'une des revendications 5 à 8,
- dans lequel une température (T) d'un milieu accumulateur de chaleur (65) est détectée dans un accumulateur de chaleur (15) ;
- dans lequel un temps de détection (t) est associé à la température (T) détectée,
- dans lequel une variation (dT/dt) de la température (T) au cours du temps de détection (t) est déterminée,
- dans lequel la variation (dT/dt) est comparée à une valeur de seuil prédéfinie lors d'une comparaison,
- dans lequel un état de fonctionnement de la pompe de circulation (300) est vérifié à chaque temps de détection (t) associé,
- dans lequel le résultat de la comparaison est ignoré lorsqu'un état de fonctionnement actif de la pompe de circulation (300) est présent au temps de détection (t) et en cas d'abaissement de la variation (dT/dt) de la température (T) en dessous d'une valeur de seuil prédéfinie,
- un paramètre de commande (91) est établi en fonction d'un résultat de la comparaison.
